## Europäisches Patentamt

## European Patent Office

## Office européen des brevets

(11) Publication number: **0 165 253**
**B1**

# EUROPEAN PATENT SPECIFICATION

(45) Date of publication of patent specification: **11.01.89**

(21) Application number: **84904051.4**

(22) Date of filing: **30.10.84**

(86) International application number:
**PCT/US84/01740**

(87) International publication number:
**WO 85/02837 04.07.85 Gazette 85/15**

(60) Consolidated with 84307458.4/0147029
(European application No./publication No.) by
decision dated 16.04.87.

(51) Int. Cl.⁴: **C 03 B 37/016,**
C 03 B 37/018, C 03 B 32/00,
C 03 B 19/06

(54) FABRICATION OF HIGH-SILICA GLASS ARTICLE.

(30) Priority: **22.12.83 US 564181**

(43) Date of publication of application:
**27.12.85 Bulletin 85/52**

(45) Publication of the grant of the patent:
**11.01.89 Bulletin 89/02**

(84) Designated Contracting States:
**DE FR GB IT NL**

(56) References cited:
EP-A-0 139 348
EP-A-0 140 651
GB-A-2 023 130
JP-A-67 053 380
US-A-3 868 170

(73) Proprietor: **AMERICAN TELEPHONE AND
TELEGRAPH COMPANY**
**550 Madison Avenue**
**New York, NY 10022 (US)**

(72) Inventor: **JOHNSON, David Wilfred, Jr.**
**P.O. Box 329**
**Pluckemin, NJ 07978 (US)**
Inventor: **MacCHESNEY, John Burnette**
**RD 1**
**Lebanon, NJ 08833 (US)**
Inventor: **RABINOVICH, Eliezer M.**
**52 Evergreen Drive**
**Berkeley Heights, NJ 07922 (US)**
Inventor: **VOGEL, Eva Milar**
**77 Evergreen Drive**
**Berkeley Heights, NJ 07922 (US)**

(74) Representative: **Johnston, Kenneth Graham
et al**
**AT&T (UK) LTD. AT&T Intellectual Property
Division 5 Mornington Road
Woodford Green Essex, IG8 OTU (GB)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

**Description**

Field of the invention

This invention pertains to methods for producing high-silica glass articles in which bubble or pore formation upon reheating is substantially suppressed.

Background of the invention

High-silica glasses have wide commercial application, in part because of their refractory properties, low thermal expansion, high thermal shock resistance, good chemical resistance, and good dielectric insulating properties when low in alkali-oxides. Recently, very pure high-silica glasses have been fabricated, and such glasses have been successfully applied to produce extremely low-loss optical fibers for communication systems.

High-silica glasses are made primarily by melting of appropriate starting materials, by the sol-gel method, or by depositing the glassy product of appropriate gas phase reactions. This application is concerned only with the sol-gel method.

The glass-forming method of concern in this application has the feature that a porous intermediate body exists at some point during glass manufacture, and that this intermediate body is at some later stage heat treated to result in a dense glass body. The glass body is then typically re-heated to at least a sintering temperature, and may be subjected to a shape-changing treatment, e.g. fiber drawing. Such heating treatment of the glass body will be referred to herein as "re-heating".

Although the fusion method of glass fabrication is probably the most widely used method, the sol-gel method of producing high-silica glasses can actually have significant advantages over the former. See, for instance, U.S. Patent 4,419,115 issued December 6, 1983 to D. W. Johnson et al.

Several variants of the sol-gel method for forming high-silica glass are known in the art. Among these are processes comprising hydrolysis and polymerization of a metal alkoxide, and processes that use particulates such as fumed silica in sol-formation. Alkoxide processes are described, for instance, in the chapter by S. Sakka in *Treatise on Materials Science and Technology*, Vol. 22, M. Tomozawa and R. H. Doremus, editors, Academic Press, 1982, pp. 129—167. For an example of the particulate method, see, for instance, U.S. Patent 4,042,361, which discloses a method of densifying fumed silica involving drying a flowable sol of silicate to form a fragmented solid which is then calcined, milled to provide a slip for casting silica articles which are then fused by heating to temperatures above the liquidus.

Fabrication of high-silica glass articles often comprises a manufacturing step in which the prepared glass is heated to a temperature above the softening temperature. For instance, optical fiber is typically produced by drawing from a glass body, generally called a preform, the drawing typically requiring heating part of the preform to a temperature of the order of 2200°C. It has been observed in the prior art that glass produced by a sol-gel method is subject to bubble formation or reboil, also sometimes called bloating, during such high temperature treatment.

Bubble formation is a highly undesirable phenomenon that typically requires rejection of affected articles. For instance, bubbles in such articles as optical fiber, lenses, prisms, or other optical elements result in light scattering that makes such articles generally unacceptable.

U.S. patents 3,954,431 and 4,011,006, teach, inter alia, that the inclusion of small quantities of $GeO_2$ in borosilicate glass suppresses bubble formation. It is also known that execution of an exacting heating routine during sintering, or sintering in a He-atmosphere, can reduce bubble formation during subsequent higher temperature manufacturing steps.

However, due to the economic potential of high quality sol-gel high-silica glass, the availability of a broadly applicable, simple, and reliable method for eliminating bubble formation would be highly desirable. This application discloses such a method.

The prior art knows many elements and compounds that can be incorporated into high-silica glass to produce changes in the physical characteristics of the glass. For instance, germanium is an important dopant in glass for optical fibers, since it results in an increase of the refractive index of silica without causing optical absorption at wavelengths of current interest. Another well-known dopant is fluorine, which lowers the refractive index of silica, in addition to markedly decreasing its viscosity and lowering its glass transition temperature. See, for instance, W. Eitel, *Silicate Sciences*, Vol. VIII, paragraph 95, page 54, Academic Press, 1976; K. Abe, *Proceedings of the Second European Conference on Optical Fiber Communications, IEE,* 59—61, Paris, France, 1976; and K. Rau et al, *Topical Meeting on Optical Fiber Transmission II, Williamsburg* (1977), pp. TUC 4-1 to TUC 4-4.

According to the present invention there is provided a method of producing an optical fiber comprising a core and a cladding surrounding the core, the core and the cladding consisting of high-silica glass, the method comprising making a high-silica glass body having a predetermined refractive index profile, with a center region of relatively high refractive index and a peripheral region of relatively low refractive index surrounding the center region, the glass body to be referred to as the preform; heating at least a part of the preform to a temperature above a sintering temperature, and drawing the optical fiber from the heated part of the preform, with the fiber core and cladding derived from the center region and peripheral region of the preform, the latter being made by a process that comprises (a) making a porous high-silica body by a sol-gel process, the porous body having an inner portion and an outer portion; (b) drying the porous body;

and (c) sintering the porous body at the sintering temperature such that the porous body is transformed into the preform, the center and peripheral regions of the preform derived, respectively, from the inner and outer portions of the porous body; characterised by (d) causing to be present, prior to completion of step (c), in both the inner and the outer portion of the porous body, a fluorine concentration that is effective to substantially prevent the evolution of bubbles in the heated part of the preform during the heating and fiber drawing, such that the core and the cladding of the optical fiber are substantially free of bubbles.

The invention is a method for producing high-silica glass articles in which bubble formation during re-heating of high-silica glass formed from a porous high-silica intermediary is substantially suppressed. The inventive method comprises forming a body comprising porous silica and heating at least part of the porous silica-comprising body to a sintering temperature, thereby producing a body comprising high-silica glass. Prior to completion of the glass-producing heat treatment, fluorine is introduced into at least a part of the silica-comprising body such that the fluorine concentration in the silica glass produced by the heat treatment is at least about 0.01% by weight (b.w.).

The fluorine concentration typically is less than about 5% by weight (b.w.), and preferably is between about 0.1% and 2% b.w. The fluorine is introduced prior to or during sintering of the porous silica-comprising body, e.g., in the sol-gel method during gel formation, by impregnation of the undried gel, by impregnation of the dried, i.e., unsintered or partially sintered gel body, or during the sintering treatment.

The fluorine can be in elemental form or be derived from appropriate fluorine containing compounds. The compounds can be gaseous, liquid, or solid, in the latter case they are preferably soluble in, e.g., water or alcohol.

In a high-silica glass article according to the invention an effective level of fluorine is present, (at least prior to re-heating), throughout the part of the glass body that is to be re-heated. For instance, in a preform (or optical fiber) according to the invention an effective level of fluorine is present both in the cladding material and in the core material. This distinguishes inventive preforms (and fiber) from the prior art, in which fluorine is commonly used to depress the clad refractive index, but is typically not incorporated into the fiber core.

"Articles" according to the invention are intended to include both final products such as optical fibers and intermediate glass bodies such as consolidated preforms.

Detailed description

As was mentioned above, the exemplary sol-gel method for producing high silica glass, i.e., glass comprising more than about 50% b.w. $SiO_2$, typically more than about 80% b.w., potentially has advantages over other common production methods. For instance, it is often easier to produce glass bodies of high purity by the sol-gel process than by melting, since the porous nature of the gel body facilitates purification by contact with appropriate gaseous reactants, e.g., chlorine treatment to remove $OH^-$. Conversely, the sol-gel method is also well suited to producing doped (uniformly or nonuniformly) glass bodies. An example of a nonuniformly doped body is an optical fiber preform.

Since very high purity and nonuniform doping typically cannot be achieved by the melt process of glass making, bodies having these properties are presently typically produced by processes involving deposition of glassy material formed in an appropriate gas phase reaction. Although these processes (e.g., OVPO, VAD, etc.) are by now highly refined, they are typically relatively slow and thus expensive. The sol-gel process has the potential of producing glass bodies of similar quality as those produced by deposition, but at substantially lower cost.

A drawback of prior art sol-gel methods is the bubble formation that is often observed on re-heating the consolidated glass, i.e., heating the glass at least to, but typically substantially above, the sintering temperature. Such re-heating occurs, for instance, during fiber drawing from a preform. Although the prior art knows some techniques for reducing or eliminating this bubbling, it is an object of this invention to provide an effective means for achieving this and that not only is compatible with existing sol-gel techniques but can lead to simpler and more economical treatment.

These and other objectives are achieved by introducing an effective amount of fluorine into the glass. Such treatment not only reduces or eliminates bubbling but also reduces glass viscosity, thus making possible processing at lower temperatures, and aids in sintering of the glass. Fluorine is also an index-lowering glass dopant that is useful in forming optical cladding material for optical fiber guide. Furthermore, introduction of fluorine assists in the removal of residual $OH^-$ groups from the silica.

Known sol-gel methods are, for instance, the colloidal gel method, and the alkoxide hydrolysis method, as described, for instance, in U.S. Patent 4,419,115 and the previously cited S. Sakka article, respectively.

The fluorine can be introduced at any convenient point of the process prior to the re-heating step that could, in prior art bodies, produce bubbling. Typically, the introduction occurs prior to completion of sintering of the glass, for instance, during gel preparation, after formation of the gel body (e.g., by impregnation of the undried body), after drying of the gel body (e.g., by impregnation of the unsintered or partially sintered body), or by exposure to gaseous reactants at temperatures below those required to sinter the dried gel, or during sintering.

A convenient method for producing a fluorine-containing gel is the introduction of a liquid or soluble solid (soluble in, e.g., water or alcohol) fluorine compound into the sol or gel. Exemplary compounds therefore are HF, $NH_4F$, and fluorinated hydrocarbons, e.g., tetraethyl ammonium fluoride hydrate.

Introduction of fluorine into an undried gel body, i.e., fluorine impregnation, can be by penetration of fluorine-containing liquid into the body. In addition to the categories of compounds mentioned in the previous paragraph, compounds soluble in chloroform or other liquid hydrocarbon can be advantageously used.

Into dried gel bodies, i.e., unsintered or partially sintered bodies, fluorine can advantageously be introduced by, in addition to the methods described above, contacting the body with fluorine or a gaseous fluorine-containing compound.

Exemplary compounds are fluorocarbons such as Freon, $CF_4$, $CF_{4-y}Cl_y$, ($0 \leq y \leq 3$) etc., fluorinated hydrocarbons HF, $NH_4F$, and other inorganic fluorides such as $SiF_4$, $GeF_4$, $BF_3$, $PF_3$, $PF_5$. The atmosphere typically consists of one or more fluorine compounds, in addition to other gases, e.g., diluents such as He, or reactants such as chlorine.

The fluorine concentration need not be uniform throughout the body formed according to the invention. Only parts of the body that are to be subjected to re-heating require the presence of fluorine, and furthermore, the concentration even in the fluorine-containing parts need not be uniform, provided, at the start of re-heating, an effective amount of fluorine (more than about 0.01%, typically more than 0.1% b.w.) is present everywhere therein. At least some fluorine typically is lost during heat treating, e.g., sintering or re-heating. An upper limit of fluorine content in high silica glass is about 5% b.w., typically due to the limited solubility of $F_2$ in high $SiO_2$ glass, as well as the thermodynamically favored reaction between $SiO_2$ and $F_2$ to form gaseous $SiF_4$ and $O_2$. These limits refer to fluorine incorporated into the glass prior to re-heating. A nonuniform fluorine distribution can produce a nonuniform refractive index distribution, and this may be used, for instance, in optical fiber manufacture.

In the following examples, processing similar to that as described in U.S. Patent 4,419,115 was generally used.

Example 1

Fumed silica (grade M-5 from Cabot Corp.) was mixed with water (40:100 b.w.), the thus formed sol was dried at 150°C and heat treated at about 800°C. 150 gms of the heated treated $SiO_2$ was again mixed with 270 gms of water and blended to form a second sol comprising aggregates of the original fumed silica particles. About 400 gm of the second sol was transferred to a borosilicate jar containing about 600 gm of $SiO_2$ cylinders (~1.27 cm diameter, ~1.27 cm long) and rolled on a mill for 5 hours, after addition of about 1% (b.w. based on the weight of the $SiO_2$ in the sol) of HF solution (about 50% HF in $H_2O$) to the contents of the jar. The milled sol was then cast into 11 mm ID $SiO_2$ tubes, allowed to gel overnight, the resulting gel tubes were removed from the molds, dried, heat treated at 1000°C in He+3% $Cl_2$ to remove bound water, and sintered at about 1400°C in He. This procedure resulted in transparent glass tubes or rods containing an estimated amount greater than 0.1% b.w. of fluorine distributed throughout the body. Heating these rods to fiber drawing temperaures (2000°C) did not produce reboil. Identically prepared rods not containing fluorine showed serious reboil at these temperatures. Unless otherwise noted, in the following examples, processing substantially as described in Example 1 was used.

Example 2

150 gm of once-dispersed and heat treated $SiO_2$, produced as in Example 1, was mixed with 203.5 gm $H_2O$ and 59.2 gm of a 4.5% b.w. solution of $H_2BO_3$ in $H_2O$, blended, transferred to a mill jar, 1.5 gm of HF added, milled for 19 hours, and cast into a concentric cylinder mold designed to yield a sintered gel glass tube of about 19 mm I.D., 25 mm O.D. After gelling, the body was removed, dried, and sintered. The resulting tube did not exhibit reboil at fiber drawing temperatures. The presence of HF also accelerated the gelling of the sol.

Example 3

The same as Example 2, except that the HF was added after 5-1/2 hours of milling.

Example 4

2% b.w. fluorine and 4.8% $B_2O_3$ were added to a gel glass batch by blending together 100 gm once dispersed and dried fused $SiO_2$, 188.5 gm of 4.5% b.w. $H_3BO_3$ solution and 4 gm of HF.

Example 5

Colloidal $SiO_2$ was produced by hydrolyzing tetraethylorthosilicate (TEOS), adding water thereto (150:220 gm), and milling for 18 hours. The resulting sol had low viscosity. 1.5 gm of HF was added to the mill jar, and milling continued for 1-1/2 hours. The cast sol should be gelled overnight. Glass was produced from the gel body substantially as described.

Example 6

90 gm of previously dispersed and dried colloidal silica (prepared substantially as described in Example 1) are mixed in a blender with 132 gm of distilled $H_2O$ in which 5.4 gm of $NH_4F$ had previously

been dissolved, resulting in a gel containing 3% b.w. of fluorine. Glass was produced from the gel substantially as described.

Example 7

A dried porous glass body was prepared substantially as described. The body was impregnated, prior to firing, by immersion in an aqueous 5.7% solution of $NH_4F$, and re-dried. This resulted in introduction of about 3% b.w. of F into the resulting dried gel.

Example 8

The procedure was substantially as in Example 7, but the dried glass body was, prior to impregnation, partially sintered at 1000°C.

Example 9

A porous glass body was prepared substantially as described, and fired in a furnace in the presence of several grams of $NH_4F$ powder, which produces a fluorine-containing atmosphere in the furnace.

Example 10

Fluorine-free glass bodies were fired together with fluorine-containing glass bodies, produced substantially as in Example 6, the latter providing the fluorine-containing atmosphere for all the bodies.

Example 11

1.8 gm of $NH_4F$ were dissolved in the water/ammonia mixture (pH=11) prepared for hydrolysis of 312 gm (1.5 moles) of TEOS to provide a 1% b.w. fluorine admixture to the $SiO_2$ powder resulting from the hydrolysis. This powder was redispersed and a sintered glass body produced therefrom by a procedure substantially as described above.

The bodies of Examples 3—11 showed substantially no evidence of reboil upon heating to fiber drawing temperatures.

Example 12

A porous glass body was produced by a method substantially as described. The body was lowered into a vertical furnace, heat treated (soaked) therein, raised, then lowered again for sintering. The heating program and the atmosphere (i.e., gas flow rates) in the furnace, for the inventive body, are given in Table I below under "Experiment 1". Also given in Table I are the data for a similarly produced body into which no fluorine was incorporated (Experiment 2). The "lowering" and "raising" times refer to the time taken to lower the body from the 100°C zone to the hot zone, or raise the body from the hot zone to the 100°C zone, respectively.

TABLE I

| | | Lowering raising (hr) | Soak (hr) | Atmosphere (cc/min) | | Temp. (°C) |
|---|---|---|---|---|---|---|
| Exp. 1 | | Lowered 1/4 | | He $Cl_2$ | 932 43 | 850 |
| | | | 16 | He $Cl_2$ | 932 43 | 850 |
| | | | 2 | He $SiF_4$ | 932 23 | 850 |
| | | Raised 1/4 | | He $SiF_4$ | 932 23 | 850 |
| | | Lowered 2 | | He $SiF_4$ | 932 23 | 1400 |
| Exp. 2 | | Lowered 1/4 | .. | He $Cl_2$ | 932 43 | 850 |
| | | | 16 | He $Cl_2$ | 932 43 | 850 |
| | | | 1-1/2 | He | 1864 | 850 |
| | | Raised 1/4 | | He | 1864 | 850 |
| | | Lowered 2 | | He | 1864 | 1400°C |

In Experiment 1, where $SiF_4$ was used to introduce fluorine into the unsintered glass, no reboil was observed upon heating to 2200°C, whereas in Experiment 2 reboil occurred under these conditions.

Example 13

A glass body was prepared substantially as in Example 12, Exp. 1, but with Freon 12 ($Cl_2F_2$) used instead of $SiF_4$. No evidence of reboil was found upon heating to 2200°C.

**Claims**

1. Method of producing an optical fiber comprising a core and a cladding surrounding the core, the core and the cladding consisting of high-silica glass, the method comprising making a high-silica glass body having a predetermined refractive index profile, with a center region of relatively high refractive index and a peripheral region of relatively low refractive index surrounding the center region, the glass body to be referred to as the preform, heating at least a part of the preform to a temperature above a sintering temperature, and drawing the optical fiber from the heated part of the preform, with the fiber core and cladding derived from the center region and peripheral region of the preform, the latter being made by a process that comprises (a) making a porous high-silica body by a sol-gel process, the porous body having an inner portion and an outer portion; (b) drying the porous body; and (c) sintering the porous body at the sintering temperature such that the porous body is transformed into the preform, the center and peripheral regions of the preform derived, respectively, from the inner and outer portions of the porous body; characterised by (d) causing to be present, prior to completion of step (c), in both the inner and the outer portion of the porous body, a fluorine concentration that is effective to substantially prevent the evolution of bubbles in the heated part of the preform during the heating and fiber drawing, such that the core and the cladding of the optical fiber are substantially free of bubbles.

2. Method according to claim 1, characterised in that at least some of the fluorine is caused to be present in the porous body by introducing fluorine into the porous body prior to sintering.

3. Method according to claim 1, characterised in that at least some of the fluorine is caused to be present in the porous body by contacting the dried porous body with a fluorine-containing atmosphere.

4. Method according to claim 1 or 3, characterised in that the fluorine concentration in the porous body is at least 0.01% by weight.

5. Method according to claim 1, characterised in that step d) comprises contacting the porous body with at least one compound selected from the group consisting of a fluorinated hydrocarbon, $CF_{4-y}Cl_y(0 \leq y \leq 3)$, $F_2$ and the inorganic fluorides.

6. Method according to claim 5, characterised in that the fluorinated hydrocarbon is tetraethylammonium fluoride hydrate.

7. Method according to claim 5, characterised in that the inorganic fluoride is selected from the group consisting of HF, $SiF_4$, $NH_4F$, $GeF_4$, $BF_3$, $PF_3$, and $PF_5$.

8. Method according to claim 5, characterised in that y=2.

9. Method according to claim 1, characterized in that the preform is heated above the sintering temperature to a temperature of at least about 2000°C.

10. Method according to claim 1, characterised in that at least part of step b) is carried out in an atmosphere comprising chlorine such that residual water and/or hydroxyl ions are removed from the porous body.

11. Method according to claim 1, characterised in that at least part of step c) is carried out in an atmosphere that comprises chlorine and fluorine.

12. Method according to claim 1, characterised in that step c) comprises maintaining the porous body at a temperature of about 1000°C in an atmosphere consisting substantially of He and about 3% $Cl_2$ such that bound water is removed from the dried porous body.

13. Method according to claim 1, characterised in that the porous body is also treated with chlorine, such that OH is removed from the porous body.

14. Method according to claim 1 or 13, characterised in that the fluorine is in the form of a chlorine-containing fluorocarbon compound.

15. Method according to claim 1, characterised by forming a sol by a process comprising mixing particles comprising silica with a liquid, and forming the gel by gelling at least a part of the sol.

16. Method according to claim 15, characterised in that the particles comprising silica are particles of fumed silica.

17. Method according to claim 1, characterised in that forming the gel comprises forming an alcohol solution of at least one alkoxide, water, and acid, and hydrolyzing the solution.

## Patentansprüche

1. Verfahren zum Herstellen einer optischen Faser mit einem Kern und einem diesen umgebenden Mantel, wobei Kern und Mantel aus Glas mit hohem $SiO_2$-Gehalt bestehen, umfassend Herstellen eines Glaskörpers mit hohem $SiO_2$-Gehalt, der ein vorbestimmtes Brechungsindexprofil mit einem Mittelbereich eines relativ hohen Brechungsindex und einen diesen umgebenden peripheren Bereich eines relativ niedrigen Brechungsindex aufweist, wobei der Glaskörper als Vorform bezeichnet sei, Erwärmen wenigstens eines Teils der Vorform auf eine Temperatur oberhalb einer Sinterungstemperatur und Ziehen der optischen Faser von dem erwärmten Teil der Vorform, wobei der Faserkern und -mantel vom Mittelbereich bzw. peripheren Bereich der Vorform erhalten werden, und wobei letztere hergestellt wird durch ein Verfahren, umfassend

(a) Herstellen eines porösen Körpers mit hohem $SiO_2$-Gehalt durch ein Sol-Gel-Verfahren, wobei der poröse Körper einen inneren Teil und einen äußeren Teil besitzt,

(b) Trocknen des porösen Körpers und

(c) Sintern des porösen Körpers bei der Sinterungstemperatur derart, daß der poröse Körper in die Vorform umgewandelt wird, wobei der mittlere und der periphere Bereich der Vorform aus dem inneren bzw. äußeren Teil des porösen Körpers erhalten werden, gekennzeichnet durch

(d) Veranlassen, daß vor Beendigung des Schritts (c) sowohl im inneren als auch im äußeren Teil des porösen Körpers eine Fluor-Konzentration zugegen ist, die dahingehend wirksam ist, im wesentlichen eine Entwicklung von Blasen im erwärmten Teil der Vorform während des Erwärmens und Faser-Ziehens zu verhindern, so daß Kern und Mantel der optischen Faser im wesenltichen frei von Blasen sind.

2. Verfahren nach Anspruch 1, dadurch gekennzeichnet, daß wenigstens etwas des Fluors veranlaßt wird, in dem porösen Körper durch vor der Sinterung erfolgendes Einführen von Fluor in den porösen Körper zugegen zu sein.

3. Verfahren nach Anspruch 1, dadurch gekennzeichnet, daß wenigstens etwas des Fluors veranlaßt wird, im dem porösen Körper durch Kontaktieren des getrockneten porösen Körpers mit einer fluorhaltigen Atmosphäre zugegen zu sein.

4. Verfahren nach Anspruch 1 oder 3, dadurch gekennzeichnet, daß die Fluorkonzentration in dem porösen Körper wenigstens 0,01 Gew.-% beträgt.

5. Verfahren nach Anspruch 1, dadurch gekennzeichnet, daß der Schritt (d) umfaßt Kontaktieren des porösen Körpers mit wenigstens einer Verbindung, die aus der aus einem fluorierten Kohlenwasserstoff, $CF_{4-y}Cl_y(0 \leq y \leq 3)$, $F_2$ und den anorganischen Fluoriden bestehenden Gruppe ausgewählt ist.

6. Verfahren nach Anspruch 5, dadurch gekennzeichnet, daß der fluorierte Kohlenwasserstoff Tetraethylammoniumfluoridhydrat ist.

7. Verfahren nach Anspruch 5, dadurch gekennzeichnet, daß das anorganische Fluorid ausgewählt ist aus der aus HF, $SiF_4$, $NH_4F$, $GeF_4$, $BF_3$, $PF_3$, und $PF_5$ bestehenden Gruppe.

EP 0 165 253 B1

8. Verfahren nach Anspruch 5, gekennzeichnet durch y=2.

9. Verfahren nach Anspruch 1, dadurch gekennzeichnet, daß die Vorform auf eine oberhalb der Sinterungstemperatur liegende Temperatur von wenigstens etwa 2.000°C erwärmt wird.

10. Verfahren nach Anspruch 1, dadurch gekennzeichnet, daß wenigstens ein Teil des Schritts (b) in einer chlorumfassenden Atmosphäre derart ausgeführt wird, daß Restwasser und/oder Hydroxylionen aus dem porösen Körper entfernt werden.

11. Verfharen nach Anspruch 1, dadurch gekennzeichnet, daß wenigstens ein Teil des Schrittes (c) in einer chlor- und fluorumfassenden Atmosphäre durchgeführt wird.

12. Verfahren nach Anspruch 1, dadurch gekennzeichnet, daß der Schritt (c) umfaßt Halten des porösen Körpers bei einer Temperatur von etwa 1.000°C in einer Atmosphäre, die im wesentlichen aus He und etwa 3% $Cl_2$ besteht, derart, daß gebundenes Wasser aus dem getrockneten porösen Körper entfernt wird.

13. Verfahren nach Anspruch 1, dadurch gekennzeichnet, daß der poröse Körper auch mit Chlor behandelt wird derart, daß OH-Gruppen aus dem porösen Körper entfernt werden.

14. Verfahren nach Anspruch 1 oder 13, dadurch gekennzeichnet, daß das Fluor in Form einer chlorhaltigen Fluorkohlenstoffverbindung vorliegt.

15. Verfahren nach Anspruch 3, gekennzeichnet durch Herstellen eines Sols durch ein Verfahren, bei dem $SiO_2$-haltige Partikel mit einer Flüssigkeit gemischt werden und das Gel durch Gelieren wenigstens eines Teils des Sols gebildet wird.

16. Verfahren nach Anspruch 15, dadurch gekennzeichnet, daß die $SiO_2$-haltigen Partikel Partikel aus abgerauchtem $SiO_2$ sind.

17. Verfahren nach Anspruch 1, dadurch gekennzeichnet, daß die Bildung des Gels die Herstellung einer alkoholischen Lösung aus wenigstens einem Alkoxid, Wasser und Säure sowie Hydrolysieren der Lösung umfaßt.

## Revendications

1. Procédé de fabrication d'une fibre optique comprenant un coeur et une gaine qui entoure le coeur, le coeur et la gaine consistant en verre à haute teneur en silice, le procédé comprenant la formation d'un corps en verre à haute teneur en silice ayant un profil d'indice de réfraction prédéterminé, avec une région centrale d'indice de réfraction relativement élevé et une région périphérique d'indice de réfraction relativement faible qui entoure la région centrale, le corps en verre constituant ce qu'on appelle la préforme, le chauffage d'au moins une partie de la préforme jusqu'à une température supérieure à une température d'agglomération, et l'étirage de la fibre optique à partir de la partie chauffée de la préforme, avec le coeur et la gaine de la fibre provenant respectivement de la région centrale et de la région périphérique de la préforme, cette dernière étant fabriquée par un processus qui comprend: (a) la formation d'un corps poreux à haute teneur en silice par un procédé sol-gel, le corps poreux ayant une partie intérieure et une partie extérieure; (b) le séchage du corps poreux; et (c) l'agglomération du corps poreux à la température d'agglomération, de façon à transformer le corps poreux pour donner la préforme, les régions centrale et périphérique de la préforme provenant respectivement des parties intérieure et extérieure du corps poreux; caractérisé en ce que (d) on fait en sorte qu'il existe, avant l'achèvement de l'étape (c), à la fois dans la partie intérieure et la partie extérieure du corps poreux, une concentration de fluor qui a pour effet d'empêcher pratiquement la formation de bulles dans la partie chauffée de la préforme, pendant le chauffage et l'étirage de la fibre, de façon que le coeur et la gaine de la fibre optique soient pratiquement exempts de bulles.

2. Procédé selon la revendication 1, caractérisé en ce que la présence d'une partie au moins du fluor dans le corps poreux est obtenue par l'introduction de fluor dans le corps poreux avant l'agglomération.

3. Procédé selon la revendication 1, caractérisé en ce que la présence d'une partie au moins du fluor dans le corps poreux est obtenue par mise en contact du corps poreux séché avec une atmosphère contenant du fluor.

4. Procédé selon la revendication 1 ou 3, caractérisé en ce que la concentration de fluor dans le corps poreux est au moins de 0,01% en poids.

5. Procédé selon la revendication 1, caractérisé en ce que l'étape (d) comprend la mise en contact du corps poreux avec au moins un composé sélectionné dans le groupe comprenant un hydrocarbure fluoré, $CF_{4-y}Cl_y$ ($0\leqq y \leqq 3$), $F_2$ et les fluorures inorganiques.

6. Procédé selon la revendication 5, caractérisé en ce que l'hydrocarbure fluoré consiste en fluorhydrate de tétraéthylammonium.

7. Procédé selon la revendication 5, caractérisé en ce que le fluorure inorganique est sélectionné dans le groupe comprenant HF, $SiF_4$, $NH_4F$, $GeF_4$, $BF_3$, $PF_3$, et $PF_5$.

8. Procédé selon la revendication 5, caractérisé en ce que y=2.

9. Procédé selon la revendication 1, caractérisé en ce que la préforme est chauffée au-delà de la température d'agglomération, jusqu'à une température d'au moins environ 2000°C.

10. Procédé selon la revendication 1, caractérisé en ce qu'une partie au moins de l'étape (b) est accomplie dans une atmosphère comprenant du chlore, de façon à éliminer du corps poreux l'eau et/ou les ions hydroxyle résiduels.

8

11. Procédé selon la revendication 1, caractérisé en ce qu'une partie au moins de l'étape (c) est accomplie dans une atmosphère qui comprend du chlore et du fluor.

12. Procédé selon la revendication 1, caractérisé en ce que l'étape (c) comprend le maintien du corps poreux à une température d'environ 1000°C dans une atmosphère consistant essentiellement en He et en environ 3% de $Cl_2$, de façon que l'eau liée soit extraite du corps poreux séché.

13. Procédé selon la revendication 2, caractérisé en ce que le corps poreux est également traité avec du chlore, de façon à extraire OH du corps poreux.

14. Procédé selon la revendication 1 ou 13, caractérisé en ce que le fluor se présente sous la forme d'un composé consistant en un fluorocarbure qui contient du chlore.

15. Procédé selon la revendication 1, caractérisé par la formation d'un sol par un processus qui comprend le mélange avec un liquide de particules contenant de la silice, et la formation du gel par gélification d'une partie au moins du sol.

16. Procédé selon la revendication 15, caractérisé en ce que les particules contenant de la silice sont des particules de silice formées par condensation à partir d'une phase vapeur.

17. Procédé selon la revendication 1, caractérisé en ce que la formation du gel comprend la formation d'une solution alcoolique d'au moins un alkoxyde, d'eau et d'acide, et l'hydrolyse de la solution.